# EUROPEAN PATENT APPLICATION

(11) **EP 0 677 856 A1**
(43) Date of publication of application: **18.10.1995**
(21) Application number: 95109531.4
(22) Date of filing: 26.09.1991
(51) Int. Cl.: H01F 3/04, H01F 3/14, H01F 27/26

(54) **Container for storing an annular magnetic core**

(30) Priority: 01.11.1990 JP 296566/90; 28.09.1990 JP 261963/90; 28.09.1990 JP 261962/90
(62) Divisional of application: 91116437.4
(71) Applicant: MITSUI PETROCHEMICAL INDUSTRIES, LTD., Tokyo (JP)
(72) Inventor: Saito, Hitoshi, Mitsui Petrochemical Ind.Ltd., Sodegaura-shi, Chiba (JP); Watanabe, Hiroshi, Mitsui Petrochemical Ind., Ltd., Sodegaura-shi, Chiba (JP); Kitazawa, Kazuyoshi, Mitsui Petrochemical Ind.Ltd., Sodegaura-shi, Chiba (JP)
(74) Representative: Lehn, Werner, Dipl.-Ing.

(57) **Abstract**

A container for storing an annular magnetic core, preferably a magnetic core according to any one of claims 7 to 15, said container having a container main body (14) with a cylindrical outer circumferential wall (12) and a cylindrical inner circumferential wall (13) having a smaller diameter than that of said outer circumferential wall (12) and arranged concentrically therein, which outer and inner circumferential walls (12, 13) being connected through a bottom plate (14a), and having an annular lid (15) for covering an opening of said container main body (14), wherein an inner surface of said container is provided with a plurality of supporting projections (16) for fixing a magnetic core stored in said container and for providing a spacing between an inner wall of said container and the magnetic core, and wherein said supporting projections (16) at least partly are arranged internally of said outer circumferential wall (12) and/or said inner circumferential wall (13).

## Description

### BACKGROUND OF THE INVENTION

### Field of the invention

In general, a magnetic core therearound is well known to cause a certain vibration if its load current is periodically turned on or off as found in a choke coil of a switching power supply. If this switching frequency is within the range of audible frequency, this vibration may cause a noise and this noise transmits around the parts and then the parts are vibrated to deteriorate an operating characteristic of each of the parts.

The aforesaid phenomenon of generating sound shows a problem that a magnetic core having a high inductance in respect to a low DC bias current and in turn having a low inductance in respect to a high DC bias current, i.e. a circuit having a rational characteristic as a choke coil for a switching power supply shows a large noise and there is a contradiction between a performance and noise.

In turn, in case of a magnetic core, it is possible to get a desired performance by forming a slit or a gap in response to a particular application of arranging a coke coil or the like. However, if the magnetic core is formed with a slit or a gap, its mechanical strength is reduced, resulting in that its resonance state may easily occur and so it may not be avoidable to increase noise as well as vibration.

### Description of the Prior Art

In view of the above, in order to reduce noise, there is provided a system in which a part near the gap in the magnetic core is fixed (see Japanese Patent Laid-Open Publication No. Sho 61(1986)-55242). However, in case of the magnetic core having a part near the gap fixed, there is a certain disturbance in an effect of reducing noise in reference to its mechanical fixing strength and further noise generated near the gap is restricted afterwards, so that there is a certain limitation in its effect.

In addition, as shown in Japanese Patent Laid-Open Publication No. Sho 62(1987)-224909, in case of storing the magnetic core in a case, there is provided a system in which the magnetic core is fixed by an adhesive between it and the case through a spacing so as to prevent noise from leaking out of the assembly.

However, this prior art has a surplus improvement in its operation and it is desired to have a more reduction of noise.

### SUMMARY OF THE INVENTION

In view of the foregoing, the present invention has been done and it is an object of the present invention to provide a method of reducing noise in a magnetic core and to produce a low noise-type magnetic core.

The method of reducing noise of a magnetic core according to the present invention in which the core is annular in its form, its sectional shape is rectangular, it has an outer circumferential surface and an inner circumferential surface, and it has a first side surface (upper surface) connecting one of the edges of these outer circumferential surface and inner circumferential surface and a second side surface (lower surface) connecting the other edges of the outer circumferential surface and the inner circumferential surface, which comprises forming a slit groove entering into the opposing surface direction at either one of the inner circumferential surface, the first side surface and the second side surface.

The magnetic core of the present invention can be classified into the following three types:
(I) a magnetic core (hereinafter called as a magnetic core I) formed in an annular shape to have a rectangular section, having an outer circumferential surface and an inner circumferential surface, and having a first side surface (an upper surface) for connecting one of the edges of these outer and inner circumferential surfaces and a second side surface (a lower surface) for connecting the other edges of each of the outer and inner circumferential surfaces, wherein at least one of the aforesaid inner circumferential surface, the first side surface and the second side surface is partially provided with a slit groove entering toward the opposing surface side;
(II) a magnetic core (hereinafter called as a magnetic core II) in which two or more magnetic cores are layered in such a manner that each of the magnetic cores has a positional relation to vibrate at the same phases; and
(III) a magnetic core (hereinafter called as a magnetic core III) in which an annular magnetic core is stored in an annular storing container having an annular lid covering the opening of a container main body with a cylindrical outer circumferential wall and a cylindrical inner circumferential wall concentrically arranged therewith having a smaller diameter than that of the outer circumferential wall which are connected through a bottom plate, and having an annular lid covering the opening of container main body, the inner surface of said storing container is provided with some supporting projections for fixing the magnetic core, and a spacing is formed between the inner surface of the storing container and the magnetic core by the supporting projections.

The present invention will be described in more detail as follows, wherein a magnetic core obtained by the method for reducing noise of the magnetic core according to the present invention correspond to the magnetic core I, this method will be described together with the magnetic core I.

### Method for Reducing Noise of Magnetic Core and Magnetic Core I

The slit groove in this magnetic core is in the range of 20% to 80% of all sectional area, preferably 40% to 75% in view of reducing noise. In addition, the width of the slit groove is preferably 0.2 to 2 mm or so.

In this connection, in the magnetic cores I, II or III according to the present invention, the aforesaid magnetic core can be constructed by winding an amorphous magnetic alloy ribbon.

As amorphous magnetic alloys, there are some Fe alloy system of Fe-B, Fe-B-C, Fe-B-Si, Fe-B-Si-C, Fe-B-Si-Cr, Fe-Co-B-Si and Fe-Ni-Mo-B or the like and Co-system of Co-B, Co-Fe-Si-B, Co-Fe-Ni-Mo-B-Si, Co-Fe-Ni-B-Si, Co-Fe-Mn-B-Si, Co-Fe-Mn-Ni, Co-Mn-Ni-B-Si, and Co-Fe-Mn-Ni-B or the like.

In addition, other than the amorphous magnetic alloy, Fe based nanocrystalline soft magnetic material such as Fe-Si-B-Cu-Nb alloy can be used.

The present inventors have analyzed how a noise of the magnetic core is generated and then the following matters have been made apparent. That is, a noise level of the magnetic core is increased as a magnetic flux density to be excited is higher.

Although a value of magnetic flux density is increased more as magnetic field applied to the magnetic core is increased, a value of the magnetic field is in reverse proportional to a distance from the center of the magnetic core, so that its value is increased more at the inner side of the magnetic core under a condition in which no gap is present.

Due to this fact, in case of forming the gap, the part where the magnetic flux density is increased without any gap there, i.e. the inside of the magnetic core is preferably formed with a gap. In addition, at least one of the side surface of the first and second side surface of the annular magnetic core is cut to show an effect that a concentration of the magnetic flux can be restricted. In addition, as compared with that of the core having a full width gap, its mechanical strength is increased, so that a restriction of resonance can be attained. Since a resonance frequency is also increased, a response in the range of audible sound is reduced and this is effective in view of preventing noise.

The formation of the groove at the first side surface of the annular magnetic core enables noise to be reduced at maximum of 12 dB. This has been effective for such a magnetic core in which its inner and outer diameter ratio is high and a magnetic flux may easily be concentrated inside the magnetic core.

Japanese Patent Laid-Open Publication No.Sho 59(1984)-144113 shows a view in which the upper surface of the annular magnetic core is formed with a slit. This prior art forms cut portions at each of the locations in the magnetic core in order to improve a magnetic characteristic (an inductance/biased DC current value) of the magnetic core, has no description concerning the reduction of noise and this prior art is different from the present invention reducing noise.

### Magnetic Core II

In case of this magnetic core, two or more magnetic cores are used. However, each of the cores has a certain gap, each of the magnetic cores is layered to each other in such a manner that the position of each of the gaps is substantially or completely coincided to each other.

In order to cause each of the magnetic cores to be vibrated under the same phase, it is preferable to cause the sizes of each of the magnetic cores to be coincided to each other and further it is preferable to form each of the magnetic cores with a same material.

As the magnetic core, it is preferable to provide a sore constructed to wind an amorphous magnetic alloy ribbon due to the fact that it may substantially reduce noise caused by a performance inherent to the amorphous material. However, a Fe-based nanocrystalline soft magnetic material may also be used. Practical examples of amorphous magnetic metals and Fe-based nanocrystalline soft magnetic material are already described before.

Noise of the magnetic core is generated due to the fact that a strain generated by a magnetostriction phenomenon of the magnetic materials may deform the magnetic core under a specific mode.

In turn, since sound waves generating noise is a wave form, a minute or rough state of pressure in a spacing is varied in response to a wave-length. In this case, if it is assumed that sound waves having the same wave-length and same phase to each other at two points are radiated toward a far one point, when distances from each of the two points to the far one point are the same to each other, a sound pressure at the far one point becomes a sum of sound pressures radiated from the two points. However, if the distances between each of the two points and the far one point are not equal to each other, the sound pressure at the far one point has a varying characteristic with a phase difference being applied as a function, resulting in that the sound pressure is reduced by a so-called interference effect. This means that noise has a directivity and this it is possible to restrict noise during its practical use. An overlapping of the magnetic cores increases a mechanical strength, resulting in that a resonance is restricted.

In this case, it is preferable to form each of the magnetic cores into the same shape to each other and to form it by a same material in order to make a vibration mode same.

### Magnetic Core III

In case of this magnetic core, as the supporting projections, it is preferable to have a contact area with the magnetic core as less as possible and a loosness of the magnetic core must be avoided.

More practically, as the supporting projections, the following forms are preferable.

At first, either the outer corner part or the inner corner part at the inner bottom part of the main body of the container is equipped with at least two supporting projects in a circumferential direction and the inner surface of the lid is provided with at least two supporting projections in a circumferential direction.

A design of the inner circumferential wall is modified to make the supporting projections integrated therewith. That is, the inner circumferential wall is made such that the intermediate part is drawn to have a smaller diameter than outer diameters of an upper end and a lower end to form a hand drum, the upper end and the lower end of the inner circumferential wall are projected to construct the supporting projections, thereby when the inner circumferential wall is fitted into the annular magnetic core, the supporting projections at the upper end and the lower end of the inner circumferential wall are abutted against the inside part of the magnetic core and then the magnetic core is held by these projections.

The extreme ends of the supporting projections are made sharp to cause substantially a point contact with the magnetic core, resulting in that its contact area may be reduced.

Although a ratio among the number of supporting projections supporting either the upper surface or lower surface of the magnetic core, the number of supporting projections for supporting the outer circumferential surface of the magnetic core and the number of supporting projections supporting the inner circumferential surface of the magnetic core is different in view of a contact area of each of the points, in general, it is preferable as the number of supporting projections for the inner circumferential surface is less and further in general a ratio of 7 : 3 : 1 shows a high effect of reducing noise.

As material for use supporting projections and the storing container, there is no specific restriction if the materials may not apply bad influence on the magnetic property of the core and normally plastics such as polypropylene, FR-PBT ( fiber reinforced polybuthylene-telephthalate), Nylon 66, MC-Nylon and FR-PB ( fiber reinforced polybutylene) are used.

In order to arrange the supporting projections at the inner surface of the storing container, processes such as an adhering, an integral molding or an inserting are employed.

As the magnetic core used in this magnetic core III, the core having amorphous magnetic metallic ribbon wound therearound as described above is preferable in view of the reasons similar to those of the magnetic core II. However, Fe-based nanocrystalline soft magnetic material may also be used.

As described above, according to the present invention, a magnetic core of which noise is reduced substantially; as compared with that of the prior art magnetic core. The reason why such an effect can be attained consists in the fact that in case of the magnetic core II, noise accommodated by an interference effect of the sound wave. In case of the magnetic core III, the magnetic core is supported within the storing container by the projections while being floated in the spacing, resulting in that the spacing may shield the transmittance of the sound wave (noise).

### BRIEF DESCRIPTION OF THE DRAWINGS

Fig. 1 to 5 illustrate a preferred embodiment concerning the method of the present invention and the magnetic core I of the present invention;
Fig. 1 is a perspective view of for showing the first embodiment.
Fig. 2 is a perspective view for showing the second embodiment.
Fig. 3 is a graph for showing a relation between a magnetic flux at a frequency of 10 KHz and a sound pressure level under an excitation of a multiplexed sinusoidal wave (an output voltage is constant at a frequency range of 1 to 20 KHz).
Fig. 4 is a graph for showing a relation between a magnetic flux density and a produced sound level, of which unit is dB (flat characteristic), at a frequency of 5 KHz when a sinusoidal wave is excited at an exciting frequency of 5 KHz.
Fig. 5 is a graph for showing a relation between a magnetic flux density and a produced sound level at a frequency of 10 KHz under a sinusoidal excitation at an exciting frequency of 5 KHz.

Fig. 6 to 9 illustrate the embodiments of the magnetic core II of the present invention;

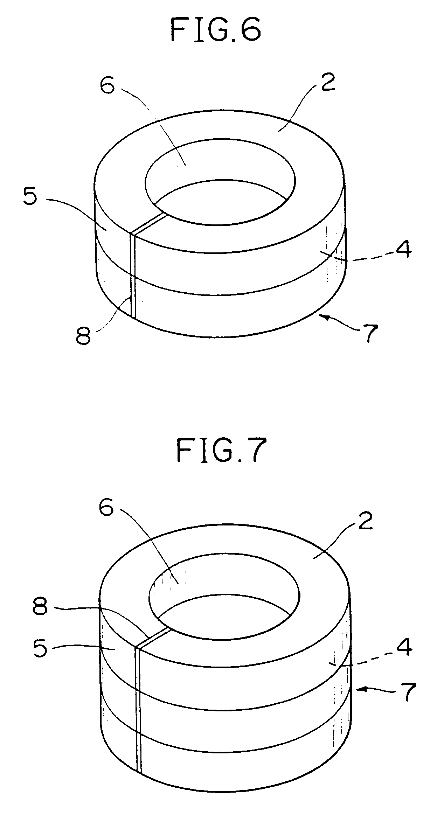

Fig. 6 is a perspective view for showing the third embodiment.
Fig. 7 is a perspective view for showing the fourth embodiment.

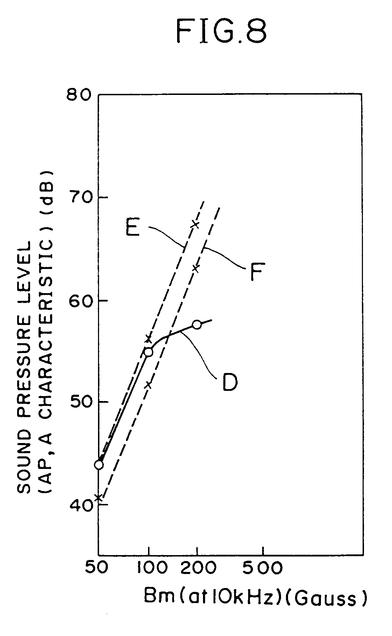

Fig. 8 is a graph for showing a relation between a magnetic flux and noise.

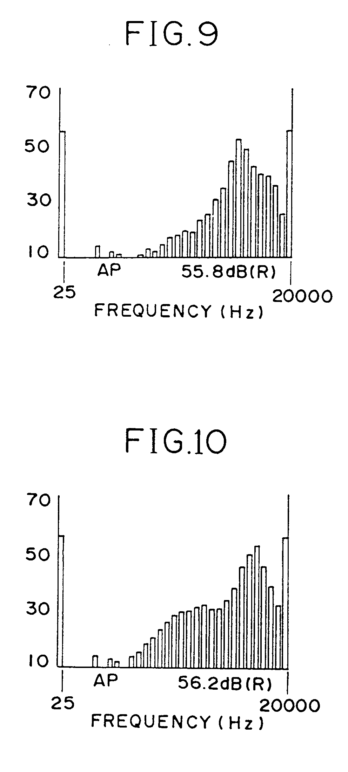

Fig. 9 is a graph for showing a spectrum of noise.

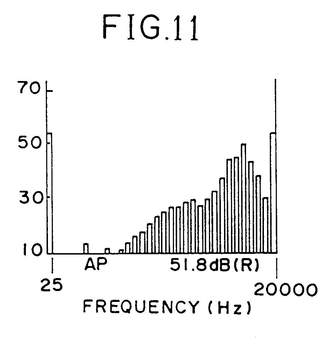

Fig. 10 and 11 are graphs are showing a spectrum of noise in a single magnetic core.

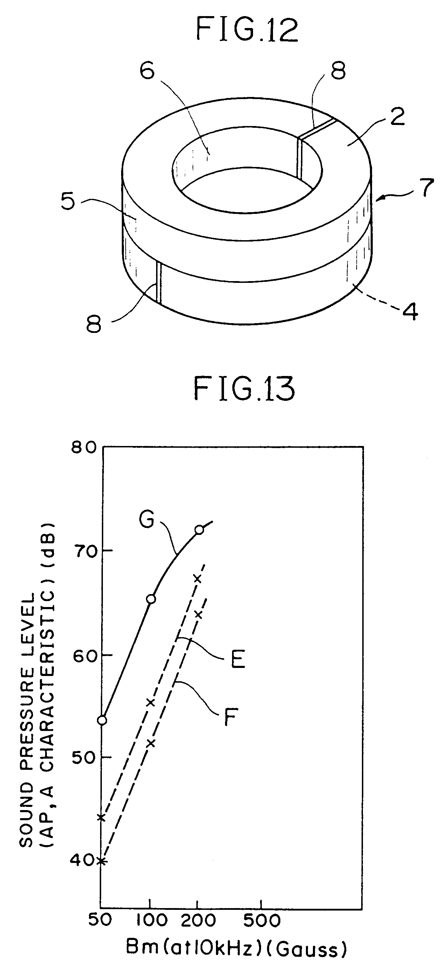

Fig. 12 is a perspective view for showing an example of comparison.
Fig. 13 is a graph for showing a relation between a magnetic flux and noise in an example of comparison.

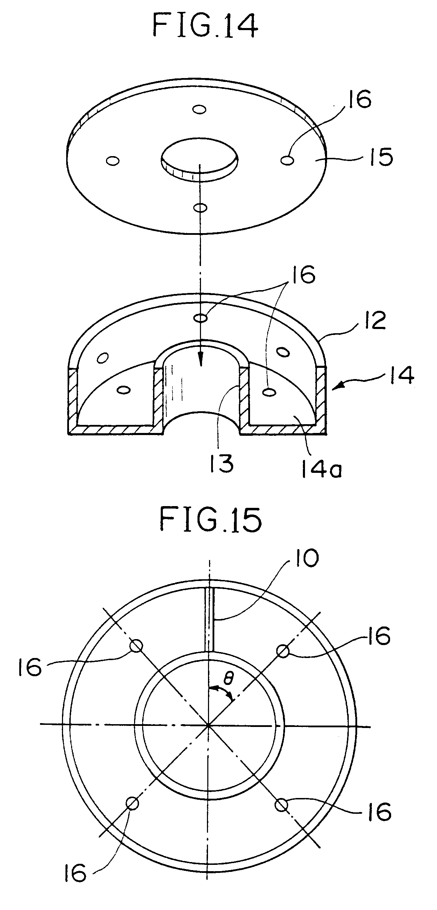

Fig. 14 to 23 illustrate the embodiments concerning the magnetic core III of the present invention.
Fig. 14 shows the fifth embodiment.

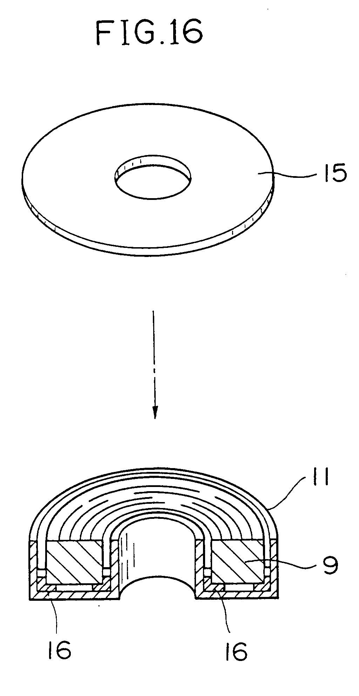

Fig. 15 is a top plan view for showing the body thereof.
Fig. 16 is a perspective view for showing the sixth embodiment.

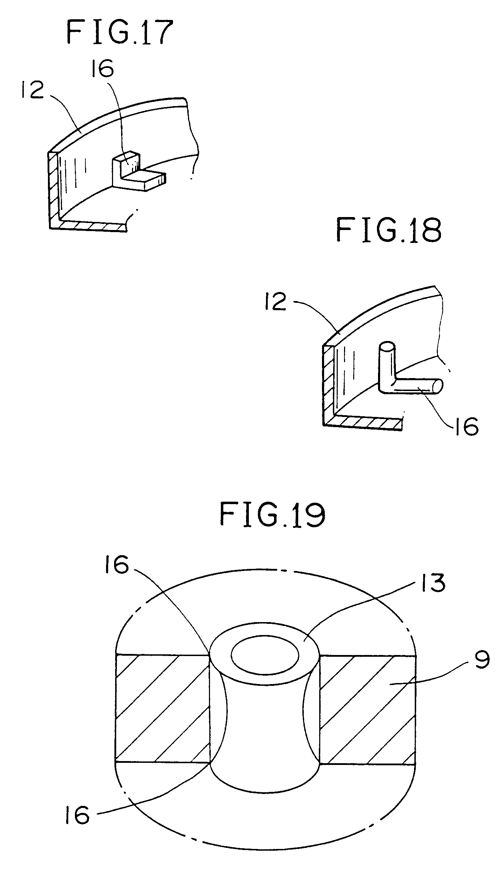

Figs. 17 and 18 show the embodiments of the supporting projections.
Fig. 19 is a partial perspective view for showing the seventh embodiment.

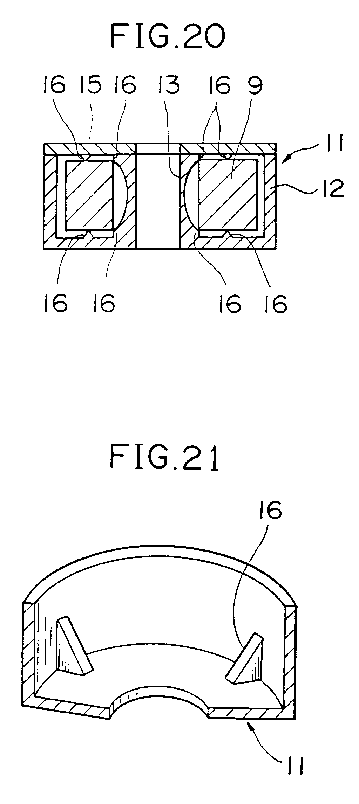

Fig. 20 is the sectional view thereof.
Fig. 21 is a perspective view for showing the eighth embodiment using other supporting projections.

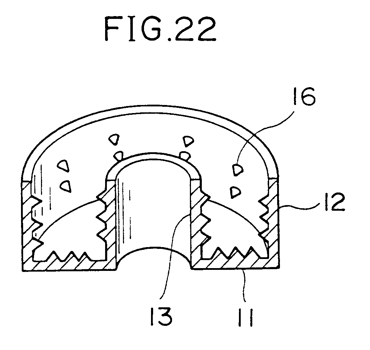

Fig. 22 is a perspective for showing the ninth embodiment.

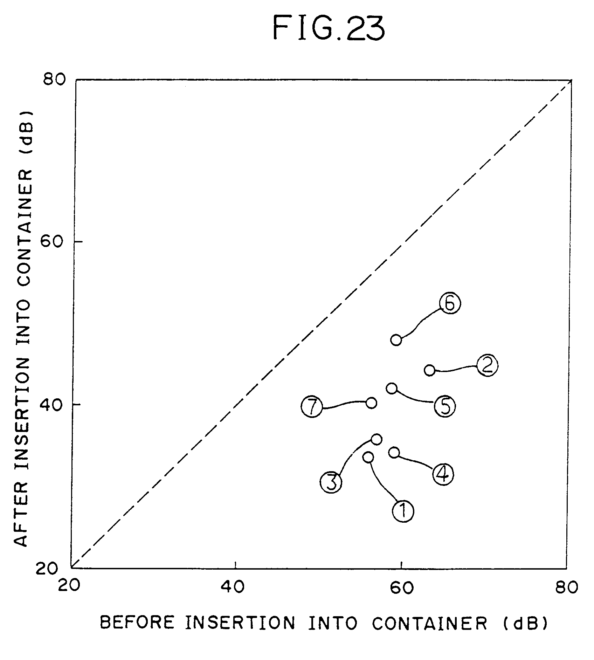

Fig. 23 is a graph for showing the result of experiments.

### DESCRIPTION OF THE PREFERRED EMBODIMENTS

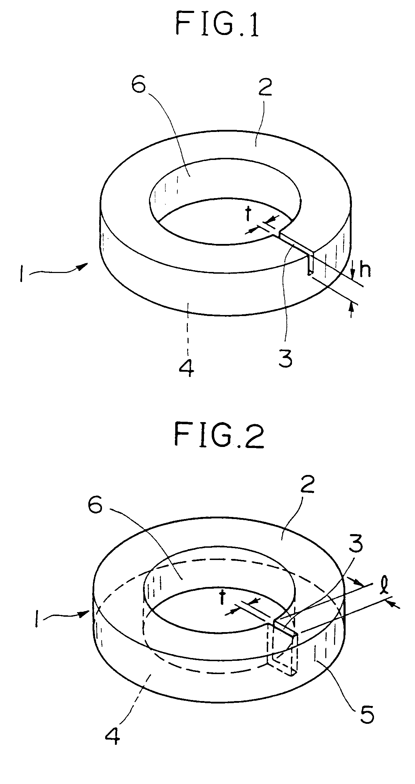

Referring now to Figs. 1 to 23, some embodiments of the present invention will be described. Embodiments 1 and 2 relate to a method of reducing noise in a magnetic core and the magnetic core I, embodiments 3 and 4 relate to the magnetic core II and embodiments 5 to 9 relate to the magnetic core III.

### Embodiment 1

Referring now to Fig. 1, the first embodiment of the present invention will be described.

A magnetic core 1 is made such that a thin ribbon of amorphous magnetic metal Fe₇₈Si₉B₁₃ (atom %) is wound, resulting in that an annular core with an outer diameter of 25 mm, an inner diameter of 15 mm and a thickness from an upper surface to a lower surface of 0 mm is formed. Its sectional shape is rectangular and has an outer circumferential surface 5 and an inner circumferential surface 6, and further it has a first side surface (upper surface) 2 connecting one edge of each of these outer circumferential surface 5 and inner circumferential surface 6 and a second side surface (lower surface) 4 for connecting each of the other edges of the outer circumferential surface 5 and the inner circumferential surface 6. (The first side surface 2 and the second side surface 4 of the magnetic core I are planet in their forms.) The outer circumferential surface 5 and the inner circumferential surface 6 are circle in their forms. The first side surface (upper surface) 2 is formed with a slit groove 3 entering toward the second side surface 4. One slit groove 3 is formed on the circumference, the depth (h) of the slit groove 3 is 6 mm and its width (t) is 0.8 mm. With such an arrangement, an area of the cut portion occupies 60 % of all sectional areas.

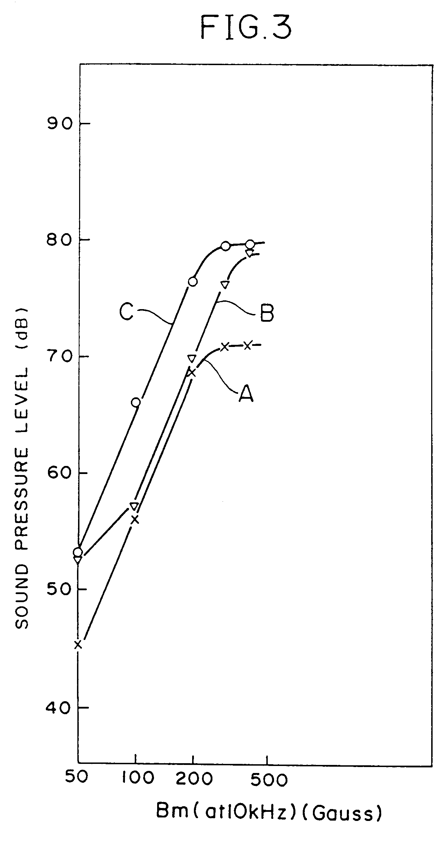

Referring now to Figs. 3 to 5, results of experiments for measuring noise will be described.

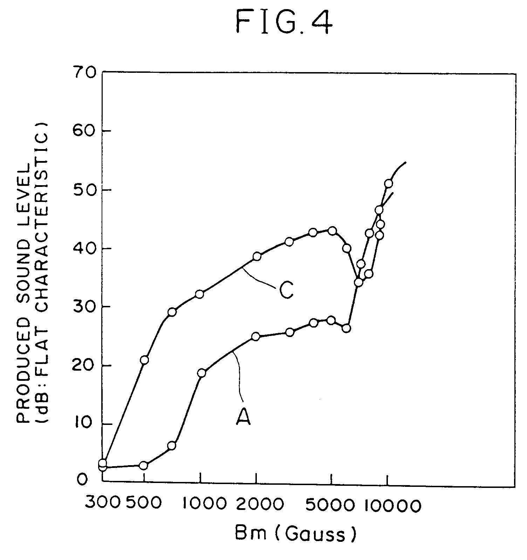

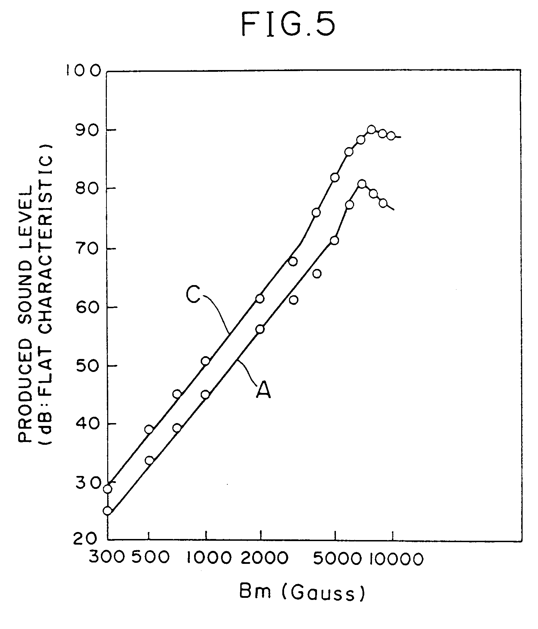

Fig. 3 is a graph for showing a relation between a magnetic flux density at a frequency of 10 KHz and a sound pressure level of noise when an excitation at a multiplex sinusoidal wave (an output voltage being constant at a frequency range of 1 to 20 KHz) is carried out. Fig. 4 is a graph for showing a produced sound level with a frequency of 5 KHz, plotted in respect to an excitation frequency of 5 KHz. Fig. 5 is a graph for showing a frequency of 10 KHz in respect to an excitation frequency of 5KHz, i.e. for showing a produced sound level of the second harmonic wave. In any of the graphs, the magnetic core is applied as a non-linear choke.

In Fig. 3, A denotes the magnetic core 1 of the aforesaid embodiment, B denotes a magnetic core having no gap, and C denotes a trail magnetic core as a comparison sample in which the outer circumferential surface 5 of the magnetic core 1 is formed with a slit groove 3 having a depth of 3 mm and a width of 0.8 mm.

As apparent from this graph, the magnetic core A has at magnetic flux density of 300 Gauss or more a reduced noise of about 8 dB as compared with that of the magnetic core B and at the same time its noise is reduced substantially in proportion to a variation of a magnetic density at 100 Gauss or less. The magnetic core B not formed with any gap shows a non-linear relation at 100 Gauss or less and noise of 53 dB even at 50 Gauss is left. In case of the core C, noise is increased more than that of the core B.

In case of the experiment shown in Fig. 4, a noise characteristic at a fundamental wave is indicated, in which a comparison with the aforesaid sample C shows a reduction in noise of maximum value of 12 dB (at a magnetic flux density of 4000 Gauss).

Fig. 5 indicates a noise level at the second harmonic wave for each of the magnetic cores A and C and it is indicated that a noise reduction of mean 7 dB in magnetic flux density of 300 to 4000 Gauss.

### Embodiment 2

Referring now to Fig. 2, the second embodiment of the present invention will be described.

Although in the first embodiment, the slit groove 3 is formed from the first side surface to the second side surface of the magnetic core 1, the slit groove 3 in the second embodiment is formed from the inner circumferential surface 6 of the magnetic core 1 toward the outer circumferential surface up to a location of l = 3 mm from the inner circumferential surface at a width t= 0.8 mm, in which a sectional area of the groove is 60 % of the entire area.

Experiment similar to that of the first embodiment was carried out with the magnetic core 1 and a similar effect of reducing noise could be attained.

In brief, any one of the inner circumferential surface 6, the first side surface 2 and the second side surface 4 of the magnetic core 1 is partially formed with a slit groove 3 entering toward an opposite surface, resulting in that noise has been improved more than that not forming the slit groove 3.

In turn, in case of the core produced as a sample of comparison having a slit groove at the outer circumferential surface 5 of the magnetic core 1, it has been confirmed that a noise characteristic is deteriorated more than that having no slit groove 3.

### Embodiment 3

Referring now to Fig. 6, the third embodiment of the present invention will be described. A magnetic core 7 is made such that a thin ribbon of amorphous magnetic metal having a composition of Fe₇₈si₉B₁₃ (atom %) in the same manner as that of the magnetic core of the first embodiment is wound to form an annular core with an outer diameter being 25 mm, an inner diameter of 15 mm and a thickness between the upper and lower surface of 10 mm. Its sectional shape is rectangular. Reference numerals 2, 4, 5 and 6 are already defined in reference to Fig. 1. This magnetic core 7 has one gap 8 with a width of 0.8 mm in radial direction.

Two magnetic cores 7 are prepared, overlapped to each other with their gaps 8 being coincided from each other and adhered with fin adhesive (under the trademark of 1207C by Three Bond Co., Ltd).

Referring now to Figs. 8 to 11, the results of experiments of noise when the magnetic core of the present invention is used as a coke coil for a switching power supply will be described.

Fig. 8 is a graph for showing a relation between a magnetic flux density at an exciting frequency of 10 KHz and a noise sound pressure level, of which unit is dB (AP, A characteristic), with a multiplex sinusoidal wave (an output voltage being constant at a frequency range of 1 to 20KHz), in which dotted lines E and F denote each of sound pressure levels when the two magnetic cores 7 are used as a single unit and in turn a solid line D denotes the magnetic core of this embodiment. In the event that the magnetic core 7 is used as a single member, noise is also increased in a linear form as a magnetic flux is increased and in turn one magnetic core 7 shows 63 dB at 200 Gauss and the other magnetic core 7 shows 67 dB.

Although in case of the magnetic core of this embodiment, noise is also linearly increased as a magnetic flux is increased within a range from 50 Gauss to 100 Gauss, increasing of noise exceeding 100 Gauss is substantially restricted and, for example, it is restricted to about 57 dB at 200 Gauss. Its noise level is lower than a single noise by 5 to 10 dB and a noise is restricted.

This value is lower than noise of single core of both magnetic cores by about 5 to 10 dB at 200 Gauss, and further this is about 56% of the value added with noised of both magnetic cores (131 dB) to improve a restriction of noise.

Fig. 9 shows a noise sound pressure level for every frequency spectrum at the magnetic core of this embodiment. Figs. 10 and 11 indicate a respective noise sound pressure level for every frequency spectrum in the event that the two magnetic cores 7 are used as a single unit. When the magnetic core 7 is used as a single unit, a peak value is 10 KHz and a large noise is found near this frequency. However, in case of the core shown in Fig. 9, the peak value is transferred to 5 KHz and then noise near 10 KHz is reduced.

In this way, a high frequency noise irritating ears can be reduced and at the same time noise occurrence when a high input is carried out can be restricted and its environment in use of the core can be kept well.

### Embodiment 4

Referring now to Fig. 7, the fourth embodiment of the present invention will be described. In case of the third embodiment described above, two magnetic cores 7 are overlapped to each other. However, in the fourth embodiment, three magnetic cores 7 are overlapped to each other.

Experiment similar to that of the third embodiment has been carried out with the magnetic cores, a similar effect of reducing noise could be attained.

### Comparative Embodiment

Two magnetic cores 7 used in the third embodiment were overlapped to each other with their gaps 8 being displaced by 180° as indicated in Fig. 12 and both of them were integrally assembled by an adhesive.

Fig. 13 is a graph for showing a relation between a magnetic flux density at a frequency of 10 KHz and a noise sound pressure level when an excitation is attained at a multiplex sinusoidal wave (an output voltage being kept constant at a frequency range of 1 to 20 KHz). Dotted lines E and F denote a sound pressure level when the two magnetic cores 7 are used as a single unit. Solid line G denotes the magnetic core of the comparative embodiment. The magnetic core of the comparison may generate a larger noise by about 10 to 19 dB than a noise level of a single magnetic core 7 over a range of 50 to 200 Gauss.

### Embodiments 5 to 9

Referring now to Figs. 14 to 16, the fifth and sixth embodiments will be described.

A magnetic core 9 is made such that a amorphous magnetic metallic ribbon ( a composition of Fe₇₈si₉B₁₃ (atom %) is wound to form an annular body with an inner diameter of 13 mm, an outer diameter of 25 mm and a height of 12 mm, in which a slit 10 having a width of 0.8 mm in its diameter direction and a plate made of FRP ( fiber reinforced plastic (not shown) ) is inserted into the slit 10.

In turn, a storing container 11 made of FR-PBT which is larger than this magnetic core 9 by twice was prepared. This storing container 11 is a so-called donut-shaped container in which an annular lid 15 is placed at a main body 14 connected by a bottom plate 14a having a cylindrical outer circumferential wall 12 and a cylindrical inner circumferential wall 13. When the magnetic core 9 is stored, a clearance of mean value of 1.0 mm is formed between the surface of the magnetic core 9 and the inner surface of the storing container 11.

As shown in Fig. 15, a plurality of supporting projections 16 for fixing the stored magnetic cores 9 within the storing container 11, i.e. at the inner surface of the body 14 of the container and the inner surface of the lid 15. Magnetic cores 9 are held by several projections 16 so as to prevent any looseness of the cores within the storing container 11.

States of the supporting projections 16 will be described and an effect of sound attenuation in response to the type of supporting projections will be described.

At first, in the example of Fig. 14 (Embodiment 5), four sharp supporting projections are arranged at the bottom surface of the main body 14 of the container, six supporting projections are arranged at the inner surface of the outer circumferential wall 12, four supporting projections are arranged at the inner circumferential wall 13, and four acute supporting projections are arranged at the inner surface of the lid 15, respectively, by a adhering method. All the projections are made of a FR-PBT.

As shown in Fig. 15, the positions of the supporting projections 16 are 45° (± 3° ), 135° (± 3° ), 225° (± 3° ), 315° (± 3° ) are preferable for attenuating noise under an assumption that a position of the slit 10 in the magnetic core 9 is 0° (an origin) in a circumferential direction, and in particular, it is preferable to arrange it on each of the positions of 45° , 135° , 225,° and 315° .

In this example, it has an advantage that an attenuation of noise can be attained in respect to all directions of the container as compared with that of this type of example.

In case of the example (Embodiment 6) shown in Fig. 16, four supporting projections 16 having an L-shape are arranged at outer corners and inner corners at the inner bottom part of the main body 14 of the container in its circumferential direction, respectively. The lid 15 is provided at its inner surface with the projections 16 in the same manner as that shown in Fig. 14. In this case, the L-shaped supporting projections 16 can be applied as a sample of forming plates shown in Figs. 17 and 18 and the columns formed in the L-shapes.

As shown in Fig. 15, the positions of the supporting projections 16 are, also similar to the L-shaped supporting projections, preferably 45° (± 3° ), 135° (± 3° ), 225d° (± 3 ° ) and 315° (± 3° ) so as to attenuate noise in case that the position of the slit 10 in the magnetic core 9 is set to 0° in its circumferential direction and in particular it is preferable to arrange the supporting projections at 135° , 225° and 315° , respectively.

In this example, it has an advantage that noise in the upper and lower directions can be reduced more as compared with that of another example of this type.

Figs. 19 and 20 illustrate an example (Embodiment 7) in which the inner circumferential wall 13 is formed to have a hand drum with its intermediate part being drawn to show a smaller diameter than an outer diameter of the upper end and an outer diameter of a lower end and the upper and the lower end of the inner circumferential wall 13 are projected to construct the supporting projections 16.

In this case, a clearance having an arcuate section is formed between the inner circumferential wall 13 and the magnetic core 9. Then, if more than at least two supporting projections similar to those shown in Fig. 14 are arranged at the bottom surface of the body 14 and the bottom surface of the lid 15, it is not necessary to arrange the supporting projections 16 at the inner surface of the outer circumferential wall 12.

Then, when the inner circumferential wall 13 is fitted into the annular magnetic core 9, the supporting projections 16 at the upper end and the lower end of the inner circumferential wall 13 are abutted against the inside part of the magnetic core 9 so as to hold the magnetic core 9.

In this example, it has an advantage that noise can be attenuated in an inner circumferential direction of the container as compared with that of another type of this example.

Fig. 21 shows an example (Embodiment 8) in which a slant surface extending over one end of the bottom surface of the body 14 and the inner surface of the outer circumferential wall 12 are formed by the supporting projections 16 so as to support the magnetic core 9 by the slant surfaces. In this case, the shape of the storing container and the shape of the magnetic core are similar to those shown in Figs. 14 to 16.

In this example, it has an advantage that the core may not be contacted with the bottom surface and the outer circumferential wall as compared with that of another type of this example.

Fig. 22 is similar to Fig. 14 and shows a configuration in which the extreme ends are made sharp and substantially point contacted with the magnetic cores 9 (Embodiment 9). Also in this case, the shapes of the storing container and the magnetic cores are similar to those shown in Figs. 1 to 3.

In this example, it has an advantage that the core can be more easily fixed in the container as compared with that of another type of this example.

Fig. 23 shows an effect of noise attenuation according to the example shown in Fig. 14.

In this example, the contact adherings are carried out at only two location between the container and the core. Other portions are not contacted with the container. With such an arrangement, the present inventors have checked the location of attaining a noise attenuation effect of the fixed part through each of the adhering portions.

The fixed locations of the adhering portions are as follows.
① the core is fixed only at two locations in the outer circumferential wall (positions of 0° (± 3° ) and 180° (± 3° ) in reference to the slit);
② the core is fixed only at two locations in the inner surface of the outer circumferential wall (positions of 45° (± 3° ) and 315° (± 3° ) in reference to the slit);
③ the core is fixed at only two locations in the inner surface of the lid (positions of 0° (± 3° ) and 180° (± 3° ) in reference to a slit);
④ the core is fixed at only two locations in the inner surface of the lid (positions of 45° (± 3° ) and 315° (± 3° ) in reference to a slit);
⑤ the core is fixed at only two locations in the inner surface of the lid (positions of 90° (± 3° ) and 270° (± 3° ) in reference to the slit);
⑥ the core is fixed at only two locations in the outer surface of the inner circumferential wall (an inner side surface of the container) (positions of 90° (± 3° ) and 270° (± 3° ) in reference to the slit); and
⑦ the core is fixed at only at two locations in the inner surface of the outer circumferential wall (positions of 90° (± 3° ) and 270° (± 3° ).

It has been found that in view of Fig. 23, no contact between the outer surface of the inner circumferential wall and the core is effective for attenuating noise.

## Claims

1. A container for storing an annular magnetic core, preferably a magnetic core according to any one of claims 7 to 15, said container having a container main body (14) with a cylindrical outer circumferential wall (12) and a cylindrical inner circumferential wall (13) having a smaller diameter than that of said outer circumferential wall (12) and arranged concentrically therein, which outer and inner circumferential walls (12, 13) being connected through a bottom plate (14a), and having an annular lid (15) for covering an opening of said container main body (14), wherein an inner surface of said container is provided with a plurality of supporting projections (16) for fixing a magnetic core stored in said container and for providing a spacing between an inner wall of said container and the magnetic core,
**characterized** in that said supporting projections (16) at least partly are arranged internally of said outer circumferential wall (12) and/or said inner circumferential wall (13).

2. The container according to claim 1 ,
characterized in that said supporting projections (16) are provided with at least two locations at either the outer corner or the inner corner of the inner bottom part of the container main body (14) in a circumferential direction and provided with at least two locations at the inner surface of the lid (15) in a circumferential direction.

3. The container according to claim 1 ,
characterized in that said inner circumferential wall (13) forms a hand drum with an intermediate part being drawn into a smaller diameter than outer diameters of an upper end and a lower end, wherein said supporting projections (16) being constituted by said upper end and said lower end of said inner circumferential wall (13) so that, when an annular magnetic core is inserted into the container, said upper end and said lower end of said inner circumferential wall (13) are abutted against the inside of the magnetic core for helding it.

4. The container according to claim 1 ,
characterized in that said supporting projections (16) are acute at their extreme ends for substantially point-contacting a magnetic core when inserted into the container.

5. The container according to claim 1 ,
characterized in that first supporting projections are provided for supporting either the upper surface or the lower surface of a magnetic core and second and third supporting projections are provided for respectively supporting the outer circumferential surface and the inner circumferential surface of the magnetic core when inserted into the container, the ratio of the numbers of said first, second and third supporting projections being 7 : 3 : 1.

6. The container according to claim 1 ,
characterized in that first supporting projections are arranged at two angular locations of 0° and 180° at inner surfaces of the bottom plate (14a) and one of the circumferential walls (12, 13) and second supporting projections are arranged at two angular positions of 90° and 270° at the inner surface of the lid in a circumferential direction.
